# EUROPEAN PATENT SPECIFICATION

(11) **EP 4 471 583 B1**
(45) Date of publication and mention of the grant of the patent: **19.08.2026**
(21) Application number: 23755813.5
(22) Date of filing: 15.02.2023
(51) Int. Cl.: G06F 9/451, G06F 3/0481, G06F 3/04847

(54) **PAGE LAYOUT ADJUSTMENT METHOD AND APPARATUS**
SEITENLAYOUTANPASSUNGSVERFAHREN UND -VORRICHTUNG
PROCÉDÉ ET APPAREIL DE RÉGLAGE DE MISE EN PAGE

(30) Priority: 18.02.2022 CN 202210153558
(43) Date of publication of application: 04.12.2024
(73) Proprietor: VIVO MOBILE COMMUNICATION CO., LTD., Dongguan, Guangdong 523863 (CN)
(72) Inventor: TANG, Huifei, Dongguan, Guangdong 523863 (CN)
(74) Representative: Murgitroyd & Company
(86) International application number: PCT/CN2023/076250
(87) International publication number: WO 2023/155811

(56) References cited:
- WO-A1-2021/027661
- CN-A- 111 026 480
- CN-A- 111 290 683
- CN-A- 112 527 172
- CN-A- 113 608 737
- CN-A- 113 961 184
- CN-A- 114 564 263
- US-A1- 2016 300 197

## Description

### TECHNICAL FIELD

This application belongs to the technical field of communications, and particularly relates to a method and apparatus for adjusting a page layout.

### BACKGROUND

As electronic devices continuously develop, the electronic devices have more and more diverse sizes, and more and more display methods, such as: multi-screen display, large screen display, split screen display, and the like. However, when the electronic devices display information in different screen display modes, they usually display the same page layout. For example, when display of the electronic device is converted from a portrait screen display state to a split screen display state, because the page layout remains unchanged, only part of original page content can be displayed. Consequently, a user needs to manually swipe a screen to display the content that was not displayed. Consequently, in the prior art, flexibility is poor in adapting to page display at different screen sizes.

WO 2021027661A1 discloses a dynamic layout method and device for an interface. The method and device is related to the technical field of electronics, and capable of automatically performing dynamic layout on elements on an interface according to a preset layout rule and a current display form, such that an application program with a set of interface layouts can be self-adapted to different display forms to perform dynamic layout of the elements and interface. The specific solution is: dividing the width of a screen of an electronic device into a plurality of columns; displaying a first interface by the electronic device; after an interface refresh signal is detected, acquiring the number of first columns corresponding to the width of a second interface to be displayed after refreshing, where the number of first columns is the number of columns comprised in the width of the second interface; determining the number of second columns according to a layout rule corresponding to a first element on the second interface, where the number of second columns is the number of columns comprised in the width of the first element; and the electronic device displaying the second interface. The dynamic layout method and device are used for dynamic layout of an interface.

CN 112527172A discloses an interface display method and device, a computer readable storage medium and electronic equipment. The method includes the steps that when layout change information of an interface is monitored, adjusting a first layout mode of a window; obtaining identification information of the display object, and determining an adjustment mode corresponding to the identification information; and adjusting the second layout mode of the display object by using the adjustment mode, so that the window and the display object are displayed on the interface according to the adjusted first layout mode and second layout mode respectively.

CN 113608737A discloses a page generation method and device, equipment and a medium. According to the page generation method, a terminal obtains new element unit configuration information from a server, and identification information and layout data of element units in the new element unit configuration information are stored in an associated mode; when a page needs to be generated, the terminal obtains corresponding target page configuration information and obtains layout data corresponding to the target element unit according to target identification information in the target page configuration information; the target element unit is generated based on the obtained layout data and information content, and then the target page is generated.

### SUMMARY

Embodiments of this application aim to provide a method and apparatus for adjusting a page layout, which can solve the problem that in the prior art, flexibility is poor in adapting page display at different screen sizes.

To solve the foregoing technical problem, this application is implemented as follows.

According to a first aspect, an embodiment of this application provides a method for adjusting a page layout, which is defined in claim 1.

According to a second aspect, an embodiment of this application provides an electronic device, which is defined in claim 7.

According to a third aspect, an embodiment of this application provides a readable storage medium, which is defined in claim 8.

According to a fourth aspect, an embodiment of this application provides a computer program product, which is defined in claim 9.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF THE DRAWINGS

FIG. 1 is a schematic view of a method for adjusting a page layout provided by an embodiment of this application;
FIG. 2 is a schematic view of a preset responsive user interface set provided by an embodiment of this application;
FIG. 3A is a first schematic exemplary view of an interface of a mobile phone provided by an embodiment of this application;
FIG. 3B is a second schematic exemplary view of an interface of a mobile phone provided by an embodiment of this application;
FIG. 4A is a third schematic exemplary view of an interface of a mobile phone provided by an embodiment of this application;
FIG. 4B is a fourth schematic exemplary view of an interface of a mobile phone provided by an embodiment of this application;
FIG. 5A is a fifth schematic exemplary view of an interface of a mobile phone provided by an embodiment of this application;
FIG. 5B is a sixth schematic exemplary view of an interface of a mobile phone provided by an embodiment of this application;
FIG. 6 is a schematic structural view of an apparatus for adjusting a page layout provided by an embodiment of this application;
FIG. 7 is a first schematic structural view of hardware of an electronic device provided by an embodiment of this application; and
FIG. 8 is a second schematic structural view of hardware of an electronic device provided by an embodiment of this application.

### DETAILED DESCRIPTION

The technical solutions in embodiments of this application are clearly and completely described in the following with reference to the accompanying drawings in the embodiments of this application.

In the specification and claims of this application, terms such as "first" and "second" are used to distinguish similar objects, but are not used to describe a specific sequence or order. It is to be understood that data used in this way is exchangeable in a proper case, so that the embodiments of this application can be implemented in an order different from the order shown or described here, and the objects distinguished by "first" and "second" are usually of the same type, and the number of objects is not limited, for example, the number of first object may be one or more than one. In addition, "and/or" used in the specification and the claims indicates at least one of the connected objects, and the character "/" generally indicates an "or" relationship between the objects associated in the context.

A method for adjusting a page layout provided by an embodiment of this application is described in detail below by means of a specific embodiment and application scenarios thereof in conjunction with the accompanying drawings.

The method for adjusting a page layout in the embodiment of this application can be applied to a scenario where a target page is displayed at different screen sizes.

As electronic devices rapidly develop, large-sized devices such as large-screen mobile phones, Pads, foldable phones, and vehicle-mounted large-screen devices also develop rapidly. But as the device has more and more diverse sizes, a page layout of the same application does not change when the page is displayed at different screen sizes, for example: when display of the electronic device is converted from a portrait screen display state to a split screen display state, a screen size decreases accordingly. However, since the page layout remains unchanged, only part of original page content can be displayed. Consequently, a user needs to manually swipe a screen to display the content that was not displayed. Therefore, in the prior art, flexibility is poor in adapting to page display at different screen sizes. With the personalized and differentiated design of various terminals, display layout design of a page in the prior art mainly faces the following problems. 1. As devices such as multi-screen devices, large-screen devices and the like emerge, various application programs face problems of a low access speed, high access complexity, a too high degree of coupling between modules, and the like. Moreover, with the increase of accessed modules, the above problems become more prominent. 2. Layout design for different screens is updated and iterated quickly, but the cost of rapid iteration is high, consuming great labor, and greatly affecting adaptation efficiency. 3. Layouts of different devices involve the problem of compatibility of multiple terminals, resulting in extremely poor compatibility and an unstable layout. 4. In many cases, we need to take both layout design and complexity into consideration, resulting in a final result of design giving way to complexity and failing to provide the user with the best display scheme under a specific scenario.

A design scheme using a responsive layout is used as the scheme of the embodiment of this application, such that by means of a responsive user interface (User Interface, UI), multiple devices can run in multiple scenarios when the UI performs adaptation once, improving the development adaptation efficiency and experience of an application page. 1. Establish a universal responsive UI public specification, ensuring consistency of interaction of multiple applications at multiple terminals and in different scenarios. 2. Help the application to automatically adapt to the UI through universal state management when the application adapts to different device sizes. 3. Meet common needs of multiple applications in a form of a software development kit (Software Development Kit, SDK), so that reusability is achieved and repeated development of the application is reduced. 4. Provide the user with partial permissions for UI display, allowing the user to personalize the final display effect of the layout.

In a scheme provided by embodiments of this application, the electronic device can determine, on the basis of target information (i.e., indicating the change in the size of the target application page), from the preset responsive user interface set, the target page layout model corresponding to the target information, and adjust the page layout of the target application page on the basis of the target page layout model. Due to the fact that a page layout model used by the electronic device to adjust the page layout of the target application page is the page layout model determined from the preset responsive user interface set and corresponding to the target information, that is, the page layout model is the page layout model determined according to the size change of the target application page after the size of the target application page changes, and therefore, by using the page layout model to adjust the page layout of the target application page, a change of the target application page can be adapted, thereby achieving different UI displays for different display states of the page, and improving the page display flexibility of the electronic device at different screen sizes.

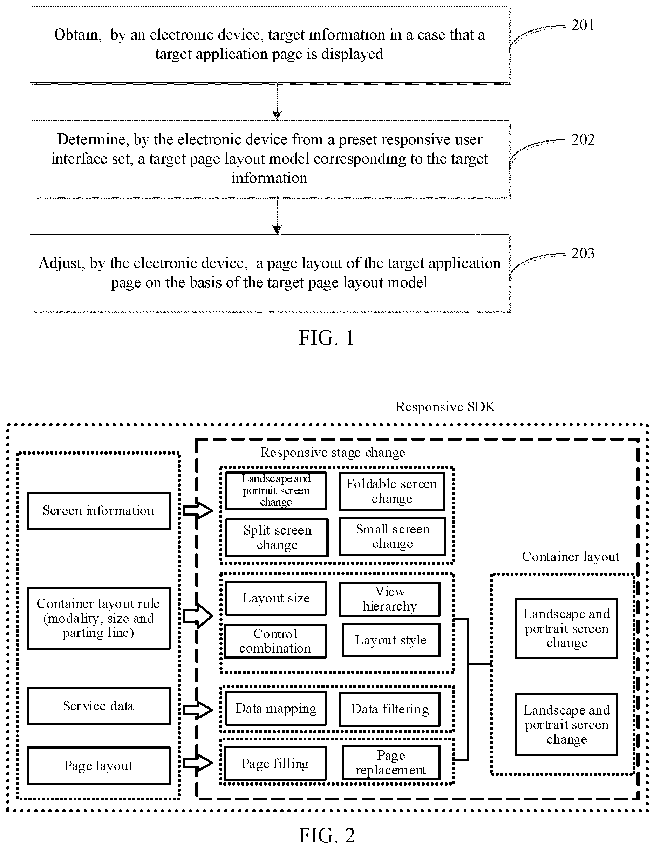

An embodiment of this application provides a method for adjusting a page layout. FIG. 1 is a flowchart of the method for adjusting a page layout provided by the embodiment of this application. The method may be applied to an electronic device. As shown in FIG. 1, the method for adjusting a page layout provided by the embodiment of this application may include step 201 to step 203 as described below.

Step 201: Obtain, by an electronic device, target information in a case that a target application page is displayed.

In the embodiment of this application, the above target information is used for indicating a change in a size of the target application page.

Optionally, in the embodiment of this application, the above target application page may be an interface of an application program in the electronic device, such as an interface of a document application program or an interface of a video application program.

Optionally, in the embodiment of this application, the above target information may be any one of the following: split-screen adjustment of a screen, page size adjustment, and screen state conversion.

Optionally, in the embodiment of this application, the split-screen adjustment of the screen can be divided into adjustment in three levels, with a split screen position at 1/3, 1/2, or 2/3 of the width or height of the screen, and different adjustment levels may also be defined by means of user settings.

Optionally, in the embodiment of this application, the above screen state conversion may be any one of the following: a landscape screen state is converted to a portrait screen state, a portrait screen state is converted to a landscape screen state, a landscape screen state is converted to a floating small window state, a floating small window state is converted to a landscape screen state, a portrait screen state is converted to a floating small window state, and a floating small window state is converted to a portrait screen state.

Optionally, in the embodiment of this application, the above change in the size of the target application page may be any one of the following: the size of the target application page is reduced, the size of the target application page is increased, the size of the target application page is horizontally increased, and vertically decreased, and the size of the target page is horizontally decreased, and vertically increased.

Step 202: Determine, by the electronic device from a preset responsive user interface set, a target page layout model corresponding to the target information.

It is to be noted that: the above preset responsive user interface set may be understood as: user interfaces for various sizes or various application scenarios. An application provides data and page layouts. The page layout is provided by the responsive UI. A service selects different UIs based on its own needs. When the page changes in state, a layout, a display state, a size, etc. are dynamically modified, and the current page is re-rendered, truly achieving a solution of adapting to terminals of multiple sizes with one set of layouts.

For example, as shown in FIG. 2, the responsive user interface is obtained from a responsive SDK. The responsive SDK includes a container layout corresponding to a responsive state change and the preset responsive user interface set. The container layout includes a responsive component and a responsive layout. The responsive state change is obtained from screen information, such as: a landscape and portrait screen change, a foldable screen change, a split screen change, a small screen change, and the like. The container layout is obtained from a container layout rule, service data (application data corresponding to the page), a page layout, and the like. The container layout rule may include a layout size, a view hierarchy, a control combination, a layout style, and other rules. The service data may include data mapping, and data filtering. The page layout may include page filling and page replacement.

Optionally, in the embodiment of this application, the above step 202 may be realized by step 202a as described below.

Step 202a: In a case that the size of the target application page changes from a first size to a second size, determine, by the electronic device, a page layout model corresponding to the second size in the preset responsive user interface set as the target page layout model.

Optionally, in the embodiment of this application, the above change from the first size to the second size may be any one of the following: the first size is larger than the second size, or the first size is smaller than the second size.

For example, the first size of the above target application page may be: a size where a split screen position is at 1/2 of a screen height, and the second size of the above target application page may be: a size where the split screen position is at 1/3 of the screen height, where the first size is larger than the second size.

For another example, or alternatively, the first size of the above target application page may be: a size of a floating small window displayed in a portrait screen state. The second size of the above target application page may be: a size of a full screen window displayed in the portrait screen state (i.e., a window displayed after clicking the floating small window for inputting), where the first size is smaller than the second size.

In the embodiment of this application, when the size of the target application page changes, the electronic device may determine the page layout model corresponding to the changed size in the preset responsive user interface set as the target page layout model, that is, different sizes have corresponding target page layout models, thereby improving the flexibility of page display of the electronic device at different screen sizes.

Step 203: Adjust, by the electronic device, a page layout of the target application page on the basis of the target page layout model.

Optionally, in the embodiment of this application, the above step 203 may be specifically realized by step 203a1 and step 203a2 as described below.

Step 203a1: Adjust, by the electronic device, first display parameters of the target application page on the basis of the target page layout model.

In the embodiment of this application, the above first display parameter include at least one of the following: display layout information, display state information, display size information, and display position information of page elements in the target application page.

Optionally, in the embodiment of this application, the page elements in the above target application page include at least one of the following: a side navigation bar, a column list, a bottom navigation bar, an index bar, a title bar, a sub-page tab, a tool bar, a modal page, a dialog box, a list, a grid, a subtitle, a setting page, and a search scenario.

Optionally, in the embodiment of this application, the display state information of the page element in the above target application page may be any one of the following: display or hide the page element.

Optionally, in the embodiment of this application, the display position information of the page element in the above target application page may be any one of the following: a bottom of the target application page, sides of the target application page, and a top of the target application page.

Step 203a2: Reconfigure, by the electronic device, parameters of the target application page on the basis of the first display parameters.

In the embodiment of this application, the electronic device may determine, on the basis of the target information, a page layout model corresponding to the target information so as to flexibly adjust the first display parameters of the target application page through the page layout model, thereby achieving adjustment of the page layout of the target application page, and improving the flexibility of page display of the electronic device at different screen sizes.

In the embodiment of this application, the above step 203 is specifically realized by step 203b as described below.

Step 203b: In a case that the page element of the target application page includes a first type of page element, hide, by the electronic device, the first type of page element in the target application page on the basis of the target page layout model, or display the first type of page element that is in a hidden state in the target application page.

In the embodiment of this application, the above first type of page element is any one of the following: a side navigation bar, a column list, a bottom navigation bar, and the like.

Optionally, in the embodiment of this application, the above first type of page element may be hidden or displayed. In a landscape screen state, the first type of page element is automatically hidden or displayed on the basis of a previous operation of the user. In a portrait screen state, the first type of page element is in a default hidden state.

Optionally, in the embodiment of this application, the above first type of page element has container properties and may accommodate controls such as a title bar, a list, a button, a card, and the like.

Optionally, in the embodiment of this application, an area of the above first type of page element may be viewed by swiping a screen vertically or horizontally, without causing a change to a window of content on the right.

Optionally, in the embodiment of this application, the above content on the right is specific content corresponding to a hierarchy of the first type of page element.

Optionally, in the embodiment of this application, switching of list items in the above area of the first type of page element is selected by the user, and the switching of the list items is supported at the same time. At this time, the content on the right side is switched accordingly.

Optionally, in the embodiment of this application, a frequently operated list item in the area of the first type of page element is displayed on a first screen.

Optionally, in the embodiment of this application, the number of the hierarchies of the above first type of page element usually does not exceed 2, and the first type of page element can enter a next hierarchy by means of expansion of classification titles. An area of the content on the right enters a next hierarchy, and by clicking the screen and swiping a side of the screen, the first type of page element may be awoken.

Optionally, in the embodiment of this application, if the above first type of page element is in a display state, a return operation of system navigation first affects the content on the right side, and the content on the right side returns to a previous level page layer by layer; when the operation returns to a topmost layer on the right side, return continues, and operation exits from a target application. If the first type of page element is in a hidden state, during system return, the return operation is first performed on the area of the content on the right side. When the operation returns to the topmost layer of the area of the content on the right side, return continues, and operation exits from the target application.

Optionally, in the embodiment of this application, if the first type of page element is displayed in a modal suspension form, return of system navigation first triggers an action of folding the first type of page element.

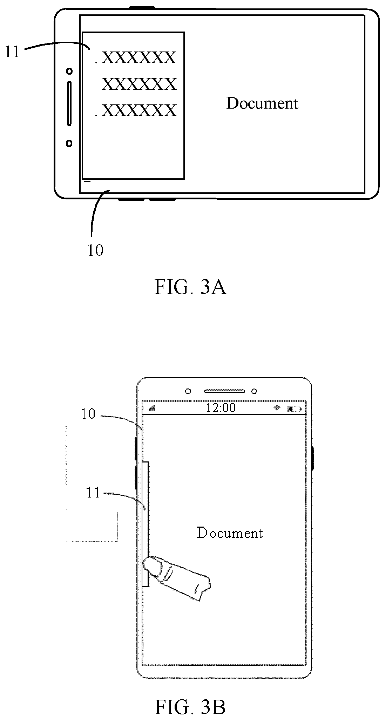

For example, description is made by taking an electronic device being a mobile phone as an example. As shown in FIG. 3A, a mobile phone is in a landscape screen state and displays a target application page (for example: a document page 10). The target application page includes a first type of page elements (such as: sidebar elements 11). As shown in FIG. 3B, when a user adjusts the mobile phone from the landscape screen state to a portrait screen state, the mobile phone may hide the sidebar element 11 in the target application page.

In the embodiment of this application, the first type of page element may be hidden or displayed according to a state of a screen. In the landscape screen state, due to a large landscape size of the screen, displaying the first type of page element does not affect display of page content, and therefore, the first type of page element may be automatically hidden or displayed according to a previous operation of the user, that is, an operating habit of the user. In the portrait screen state, due to a small landscape size of the screen, displaying the first type of page element affects the display of the page content, and therefore, the first type of page element is in a default hidden state, making page display of the electronic device more flexible at different screen sizes.

Optionally, in the embodiment of this application, the above step 203 may be specifically realized by step 203c as described below.

Step 203c: In a case that the page element of the target application page includes a second type of page element, adjust, by the electronic device, second display parameters of the target application page on the basis of the target page layout model.

In the embodiment of this application, the above second display parameters include at least one of the following: a line spacing of the page element of the target application page, a display size of the page element of the target application page, and a display number of the page element of the target application page.

Optionally, in the embodiment of this application, the above second type of page element may be any one of the following: an index bar, a title bar, a sub-page tab, a tool bar, a dialog box, a list, and the like.

Optionally, in the embodiment of this application, the line spacing of the second type of page element in the target application page may be adjusted to decrease or increase to adapt to display of the current screen size.

Optionally, in the embodiment of this application, the display number of the second type of page element in the target application page may be displayed in a simplified mode. Some of the page elements may be displayed in the simplified mode, and the user can swipe the screen to display the remaining page elements.

Optionally, in the embodiment of this application, when the screen is in a split screen state and a split screen position is at 1/2 of a screen height, if the second type of page element cannot be fully displayed, the line spacing of the second type of page element in the target application page is decreased, and a specific decrease value is determined according to visual specifications.

Optionally, in the embodiment of this application, when the screen is in the split screen state and the split screen position is at 1/3 of the screen height, if the second type of page element cannot be fully displayed, the second type of page element is displayed in the simplified mode.

Optionally, in the embodiment of this application, if the second type of page element cannot be fully displayed in a landscape screen display state, the second type of page element is also displayed in the simplified mode.

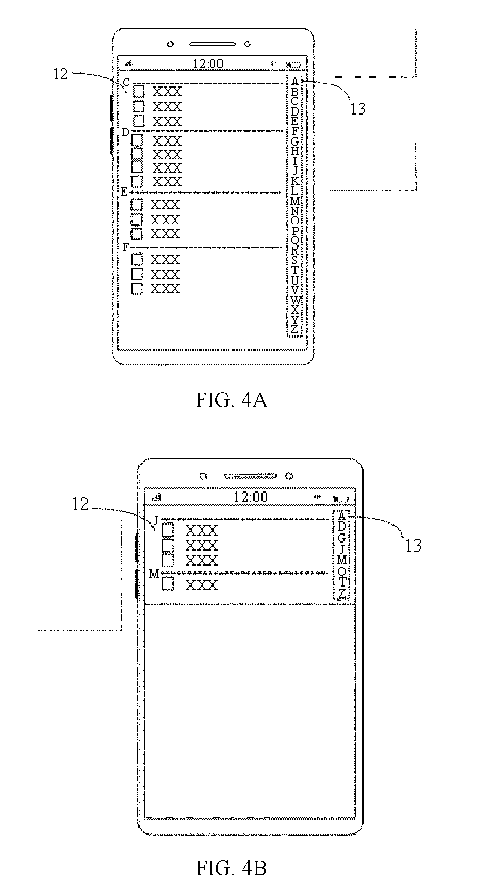

For example, as shown in FIG. 4A, a mobile phone is in a portrait screen state and displays a target application page on a screen (for example: a contact page 12). The contact page 12 includes a second type of page element (for example: index bar element 13). As shown in FIG. 4B, after a split screen operation is performed on the mobile phone (for example: a split screen position is at 1/3 of a screen height), the mobile phone may display the index bar element 13 included in the contact page 12 in a simplified mode in a 1/3 split screen. The index bar element 13 only displays some letters and only retains "A • D • G • J • M • Q • T • Z".

In the embodiment of this application, the electronic device can dynamically adjust the page element in the target application page according to different screen sizes, making the page element in the page more suitable for display of the current screen size, so that a user can conveniently operate the target application page and the flexibility of page display of the electronic device at different screen sizes is improved.

The embodiment of this application provides a method for adjusting a page layout. The electronic device can determine, on the basis of target information (i.e., indicating a change in a size of a target application page), from a preset responsive user interface set, a target page layout model corresponding to the target information, and adjust a page layout of the target application page on the basis of the target page layout model. Due to the fact that a page layout model used by the electronic device to adjust the page layout of the target application page is the page layout model determined from the preset responsive user interface set and corresponding to the target information, that is, the page layout model is the page layout model determined according to the size change of the target application page after the size of the target application page changes, and therefore, by using the page layout model to adjust the page layout of the target application page, a change of the target application page can be adapted, thereby achieving different UI displays for different display states of the page, and improving the page display flexibility of the electronic device at different screen sizes.

It can be understood that the embodiment of this application provides a scheme for the electronic device to quickly display different UIs by means of different state management, which is suitable for electronic devices of any screen size. The electronic device may convert a corresponding behavior into a preset data format and a page layout model on the basis of an operation behavior of the user (a page layout is provided by a responsive UI), and choose different UIs in combination with a service need of the currently displayed application page. After the page changes in state, the electronic device may dynamically modify a layout, display state, size and other parameters of the page, and re-renders the current application page.

Optionally, in the embodiment of this application, after the above step 203, the method for adjusting a page layout provided by the embodiment of this application further includes step 301 and step 302 as described below.

Step 301: Receive, by the electronic device, a first input of a user for the first type of page element.

Optionally, in the embodiment of this application, the above first input is an input for adding, deleting, modifying, etc. list items in the area of the first type of page element.

Step 302: Edit, by the electronic device in response to the first input, the first type of page element by using an editing manner corresponding to the first input.

Optionally, in the embodiment of this application, the editing manner may include at least one of the following: a deleting manner, a size adjustment manner, and a cutting manner.

Optionally, in the embodiment of this application, a fixed important list item in the area of the first type of page element may be grayed out in an editing state, without being edited.

In the embodiment of this application, the user can perform input for the first type of page element, and then the electronic device uses the editing manner corresponding to the first input to edit and process the first type of page element, so that the first type of page element can be flexibly adjusted according to a need of the user, improving flexibility of page display of the electronic device at different screen sizes.

Optionally, in the embodiment of this application, after the above step 203, the method for adjusting a page layout provided by the embodiment of this application further includes step 401 and step 402 as described below.

Step 401: Receive, by the electronic device, a second input of a user for a first screen area.

In the embodiment of this application, the above first screen area is a screen area for displaying the target application page.

Optionally, in the embodiment of this application, the above second input is a dragging input of the user on the screen.

Optionally, in the embodiment of this application, the above dragging input may be any one of the following: an input for dragging a 1/2 split screen to a 1/3 split screen; an input for dragging a large screen to a small screen; and an input for dragging a small screen to a large screen.

Step 402: Adjust, by the electronic device in response to the second input, a size of the first screen area, and adjust a page size of the target application page on the basis of the adjusted size of the first screen area.

Optionally, in the embodiment of this application, in a split screen state, a size of a control remains unchanged, and a landscape width adapts to a split screen ratio, (for example, a font size and an icon size remain unchanged all the time), widths of sidebar navigation, a column list and the like are always kept consistent with a full screen width, and a bottom navigation layout changes from a left-right layout to an up-down layout.

Optionally, in the embodiment of this application, when the screen is in the split screen state and the split screen position is at 1/2 or 1/3 of the screen width or height, a layout style of the target application page changes to a mobile phone layout.

Optionally, in the embodiment of this application, in the above mobile phone layout, the sidebar navigation, the column list, a modal pop-up window, and the like are not displayed.

Optionally, in the embodiment of this application, when the screen is in the split screen state and the split screen position is at 1/2 of the screen height, horizontal stretch may be performed. A stretching size here is affected by user dragging, and a small screen, a column and the like of a corresponding size may be formed by means of dragging by the user on his/her own.

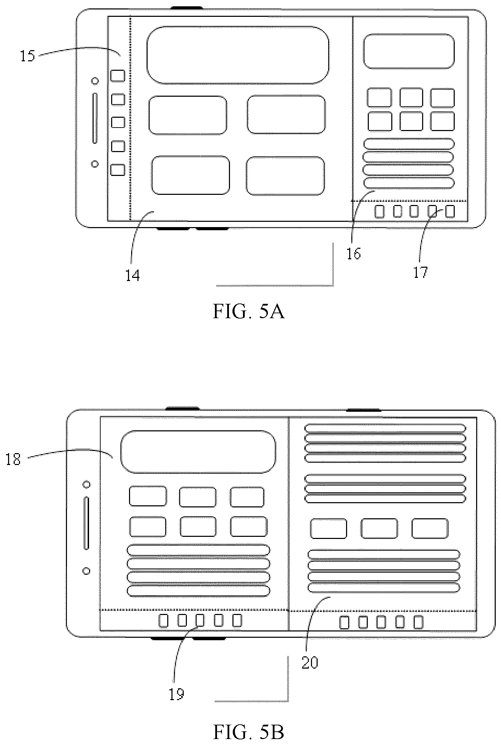

For example, description is made by taking an electronic device being a Pad as an example. As shown in FIG. 5A, the Pad is in a split screen state, and a split screen position is at 1/3 of a screen width. A target application interface (such as a video page 14) is displayed in 2/3 of the page, and includes video page information and a bottom navigation bar 15. A target application interface (such as a shopping page 16) is displayed in 1/3 of the page, that is, the target application interface includes shopping page information and a bottom navigation bar 17. When the user drags the screen from 1/3 of a split screen width to 1/2 of the split screen width, as shown in FIG. 5B, a video page 14 changes to a video page 18, a display layout changes to a mobile phone layout, and a bottom navigation bar changes from an up-down layout to a left-right layout (i.e., a bottom navigation bar 19 in FIG. 5B). The shopping page 16 changes to a shopping page 20. Due to the fact that a size changes from 1/3 to 1/2, the display layout is still the mobile phone layout. A display layout of the bottom navigation bar 17 remains unchanged, and the page displays more information.

After the electronic device adjusts the page layout of the target application page, when a user adjusts a size of a screen area displaying a target application page, the electronic device can also adjust a size of the target application page according to the adjusted size of the screen area, so that the size of the target application page adapts to the size of the screen area, improving flexibility of the electronic device in adjusting the display size of the page.

It is to be noted that: the method for adjusting a page layout provided by the embodiment of this application can be performed by an electronic device, or an apparatus for adjusting a page layout, or a control module in an interface display apparatus. In the embodiment of this application, the apparatus for adjusting a page layout provided by the embodiment of this application is described with the electronic device performing the method for adjusting a page layout as an example.

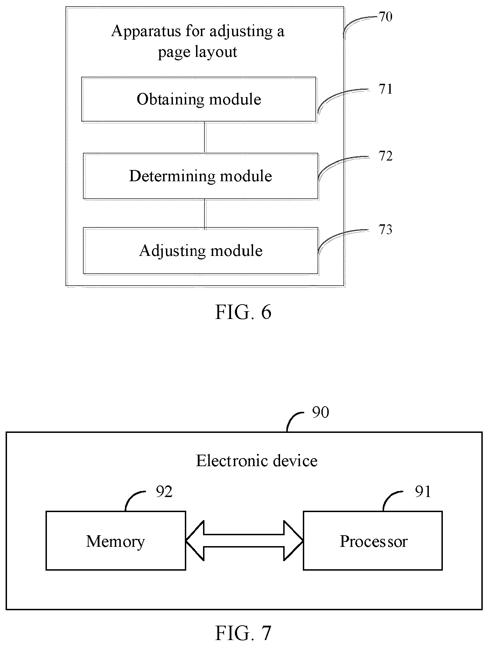

FIG. 6 is a possible schematic structural view of the apparatus for adjusting a page layout involved in the embodiment of this application. As shown in FIG. 6, the apparatus for adjusting a page layout 70 may include: an obtaining module 71, a determining module 72, and an adjusting module 73.

The obtaining module 71 is configured to obtain target information in a case that a target application page is displayed, the target information being used for indicating a change in a size of the target application page. The determining module 72 is configured to determine, from a preset responsive user interface set, a target page layout model corresponding to the target information. The adjusting module 73 is configured to adjust a page layout of the target application page on the basis of the target page layout model determined by the determining module 72.

The embodiment of this application provides an apparatus for adjusting a page layout, due to the fact that a page layout model used by the apparatus for adjusting a page layout to adjust the page layout of the target application page is the page layout model determined from the preset responsive user interface set and corresponding to the target information, that is, the page layout model is the page layout model determined according to the size change of the target application page after the size of the target application page changes, and therefore, by using the page layout model to adjust the page layout of the target application page, the page layout model can adapt to a change of the target application page, thereby achieving different UI displays for different display states of the page, and improving the page display flexibility of the apparatus for adjusting a page layout at different screen sizes.

In a possible implementation mode, the above determining module 72 is specifically configured to determine, in a case that the size of the target application page changes from a first size to a second size, a page layout model corresponding to the second size in the preset responsive user interface set as the target page layout model.

In a possible implementation mode, the above adjusting module 73 is specifically configured to, adjust first display parameters of the target application page on the basis of the target page layout model, the first display parameters including at least one of the following: display layout information, display state information, display size information, and display position information of page elements in the target application page; and reconfigure parameters of the target application page on the basis of the first display parameters.

In the implementation mode, the above adjusting module 73 is specifically configured to, in a case that the page element of the target application page includes a first type of page element, hide the first type of page element in the target application page on the basis of the target page layout model, or display the first type of page element that is in a hidden state in the target application page.

In a possible implementation mode, an interface display apparatus 70 provided by the embodiment of this application further includes: a receiving module and an editing module. The receiving module is configured to receive, after the adjusting module 73 adjusts the page layout of the target application page on the basis of the target page layout model, a first input of a user for the first type of page element. The editing module is configured to edit, in response to the first input received by the receiving module, the first type of page element by using an editing manner corresponding to the first input.

In a possible implementation mode, the above adjusting module 73 is specifically configured to adjust, in a case that the page element of the target application page includes a second type of page element, second display parameters of the target application page on the basis of the target page layout model, the second display parameters including at least one of the following: a line spacing of the page element of the target application page, a display size of the page element of the target application page, and a display number of the page element of the target application page.

In a possible implementation mode, an interface display apparatus 70 provided by the embodiment of this application further includes: a receiving module. The receiving module is configured to receive, after the adjusting module 73 adjusts the page layout of the target application page on the basis of the target page layout model, a second input of a user for a first screen area, the first screen area being a screen area for displaying the target application page. The above adjusting module 73 is further configured to adjust, in response to the second input received by the above receiving module, a size of the first screen area, and adjust a page size of the target application page on the basis of the adjusted size of the first screen area.

The apparatus for adjusting a page layout in the embodiment of this application may be an apparatus, and may also be a component, an integrated circuit or a chip in the electronic device. The apparatus may be a mobile electronic device or a non-mobile electronic device. For example, the mobile electronic device may be a mobile phone, a tablet computer, a notebook computer, a handheld computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), and the like, and may also be a server, a network attached storage (Network Attached Storage, NAS), a personal computer (personal computer, PC), a television (television, TV), a teller machine, or a self-service machine, etc., which is not specifically limited in the embodiments of this application.

The apparatus for adjusting a page layout in the embodiment of this application may be an apparatus with an operating system. The operating system may be an Android (Android) operating system, may be an iOS operating system, or may be another possible operating system, which is not specifically limited in the embodiment of this application.

The apparatus for adjusting a page layout provided by the embodiment of this application can implement various processes implemented by the above method embodiment. To avoid repetition, details are not described here again.

Optionally, as shown in FIG. 7, an embodiment of this application further provides an electronic device 90, including a processor 91 and a memory 92, a program or an instruction executable on the processor 91 being stored in the memory 92, wherein when the program or instruction is executed by the processor 91, various steps of the embodiment of the above method for adjusting a page layout are implemented, and same technical effects can be achieved. To avoid repetition, details are not described here again.

It is to be noted that: the electronic device in the embodiment of this application includes the above mobile electronic device and the above non-mobile electronic device.

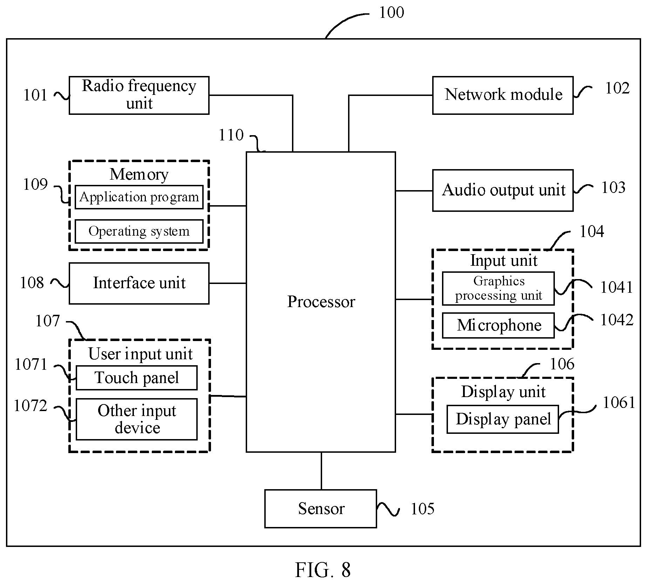

FIG. 8 is a schematic structural view of hardware of an electronic device of an embodiments of this application.

The electronic device 100 includes, but is not limited to: a radio frequency unit 101, a network module 102, an audio output unit 103, an input unit 104, a sensor 105, a display unit 106, a user input unit 107, an interface unit 108, a memory 109, a processor 110, and the like.

A person skilled in the art may understand that the electronic device 100 may further include a power supply (such as a battery) for supplying power to the various components, and the power supply may be logically connected to the processor 110 by using a power management system, thereby implementing functions such as charging, discharging, and power consumption management by using the power management system. The electronic device structure shown in FIG. 8 does not constitute a limitation on the electronic device, and the electronic device may include components more or fewer than components shown in the figure, or combine some components, or have different component arrangements, which will not be described in detail here.

The processor 110 is configured to obtain target information in a case that a target application page is displayed, the target information being used for indicating a change in a size of the target application page; determine, from a preset responsive user interface set, a target page layout model corresponding to the target information; and adjust a page layout of the target application page on the basis of the target page layout model.

The embodiment of this application provides an electronic device. Due to the fact that a page layout model used by the electronic device to adjust the page layout of the target application page is the page layout model determined from the preset responsive user interface set and corresponding to the target information, that is, the page layout model is the page layout model determined according to the size change of the target application page after the size of the target application page changes, and therefore, by using the page layout model to adjust the page layout of the target application page, the page layout model can adapt to a change of the target application page, thereby achieving different UI displays for different display states of the page, and improving the page display flexibility of the electronic device at different screen sizes.

Optionally, the processor 110 is specifically configured to determine, in a case that the size of the target application page changes from a first size to a second size, a page layout model corresponding to the second size in the preset responsive user interface set as the target page layout model.

Optionally, the processor 110 is specifically configured to adjust first display parameters of the target application page on the basis of the target page layout model, the first display parameters including at least one of the following: display layout information, display state information, display size information, and display position information of page elements in the target application page; and reconfigure parameters of the target application page on the basis of the first display parameters.

The processor 110 is specifically configured to, in a case that the page element of the target application page includes a first type of page element, hide the first type of page element in the target application page on the basis of the target page layout model, or display the first type of page element that is in a hidden state in the target application page.

Optionally, a user input unit 107 is configured to receive, after the processor 110 adjusts the page layout of the target application page on the basis of the target page layout model, a first input of a user for the first type of page element.

The processor 110 is further configured to edit, in response to the first input, the first type of page element by using an editing manner corresponding to the first input.

Optionally, the processor 110 is specifically configured to adjust, in a case that the page element of the target application page includes a second type of page element, second display parameters of the target application page on the basis of the target page layout model, the second display parameters including at least one of the following: a line spacing of the page element of the target application page, a display size of the page element of the target application page, and a display number of the page element of the target application page.

Optionally, the user input unit 107 is further configured to receive, after the processor 110 adjusts the page layout of the target application page on the basis of the target page layout model, a second input of a user for a first screen area, the first screen area being a screen area for displaying the target application page.

The processor 110 is further configured to adjust, in response to the second input, a size of the first screen area, and adjust a page size of the target application page on the basis of the adjusted size of the first screen area.

The electronic device provided by the embodiment of this application can implement various processes implemented by the above method embodiment and achieve the same technical effect. To avoid repetition, details are not described here again.

The beneficial effects of various implementation modes in this embodiment can specifically refer to the beneficial effects of corresponding implementation modes in the above method embodiment. To avoid repetition, details will not be repeated herein.

It is to be understood that, in the embodiment of this application, the input unit 104 may include a graphics processing unit (Graphics Processing Unit, GPU) 1041 and a microphone 1042. The graphics processing unit 1041 performs processing on image data of a static picture or a video that is obtained by an image acquisition device (for example, a camera) in a video acquisition mode or an image acquisition mode. The display unit 106 may include a display panel 1061. The display panel 1061 may be configured in the form of a liquid crystal display, an organic light-emitting diode, or the like. The user input unit 107 includes at least one of a touch panel 1071 and another input device 1072. The touch panel 1071 is also called a touchscreen. The touch panel 1071 may include two parts: a touch detection apparatus and a touch controller. The another input device 1072 may include, but is not limited to, a physical keyboard, a functional key (such as a volume control key or a switch key or the like), a track ball, a mouse, and a joystick, which will not be described in detail here.

The memory 109 may be configured to store software programs and various data. The memory 109 may mainly include a first storage area for storing programs or instructions and a second storage area storing data. The first storage area may store an operating system, an application program or instruction required by at least one function (for example, a sound playback function and an image display function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct Rambus random access memory (Direct Rambus RAM, DRRAM). The memory 109 in the embodiment of this application includes, but is not limited to, these memories and any other suitable types of memories.

The processor 110 may include one or more processing units. Optionally, the processor 110 integrates an application processor and a modem processor. The application processor mainly processes operations relating to an operating system, a user interface, an application program, and the like, and the modem processor, such as a baseband processor, mainly processes a wireless communication signal. It may be understood that the above modem processor may also not be integrated into the processor 110.

An embodiment of this application further provides a readable storage medium. A program or an instruction is stored on the readable storage medium. The program or instruction, when executed by a processor, implements various processes of the above method embodiment, and the same technical effect can be achieved. To avoid repetition, details are not described here again.

The processor is a processor in the electronic device in the above embodiment. The readable storage medium includes a computer-readable storage medium, such as, a computer read-only memory (ROM), a random access memory (RAM), a magnetic disk, or an optical disc or the like.

An embodiment of this application further provides a chip. The chip includes a processor and a communication interface. The communication interface is coupled to the processor. The processor is configured to run a program or an instruction to implement various processes of the above method embodiment, and the same technical effect can be achieved. To avoid repetition, details are not described here again.

It should be understood that the chip mentioned in the embodiment of this application may also be called a system level chip, a system chip, a chip system or a system-on-chip.

An embodiment of this application provides a computer program product. The program product is stored in a storage medium. The program product is executed by at least one processor to implement various processes of the above method embodiment, and the same technical effect can be achieved. To avoid repetition, details are not described here again.

It is to be noted that: the terms "include", "comprise", or any other variants thereof in this specification are intended to cover a non-exclusive inclusion, such that a process, method, article, or apparatus that includes a list of elements not only includes those elements, but also includes other elements not expressly listed or inherent to such process, method, article, or apparatus. An element proceeded by "includes a ..." does not, without more constraints, preclude the existence of additional identical elements in the process, method, article, or apparatus that includes the element. Furthermore, it is to be noted that the scope of the method and apparatus in the implementation modes of this application is not limited to performing the functions in the order shown or discussed, but may also include performing the functions in a substantially same manner or in a reverse order according to the functions involved. For example, the described method may be performed in an order different from the order described, and various steps can also be added, omitted, or combined. In addition, features described with reference to some examples may also be combined in other examples.

According to the descriptions in the above implementation modes, a person skilled in the art may clearly learn that the above embodiment method may be implemented by relying on software and an essential common hardware platform or, of course, by using hardware, however, in many cases, the former is a better implementation mode. On the basis of such an understanding, the technical solutions of this application essentially, or the part contributing to the prior art, may be presented in the form of a computer software product. The computer software product is stored in a storage medium (for example, ROM/RAM, a magnetic disk, or an optical disc), including several instructions to enable a terminal (which may be a mobile phone, a computer, a server, a network device, or the like) to perform the methods described in the various embodiments of this application.

## Claims

1. A method for adjusting a page layout, comprising:
obtaining (201) target information in a case that a target application page (10, 12, 14, 16) is displayed, the target information being used for indicating a change in a size of the target application page (10, 12, 14, 16);
determining (202), from a preset responsive user interface set, a target page layout model corresponding to the target information; and
adjusting (203) a page layout of the target application page (10, 12, 14, 16) on a basis of the target page layout model; **characterized in that**
the adjusting (203) the page layout of the target application page (10, 12, 14, 16) on the basis of the target page layout model comprises:
in a case that a page element of the target application page (10, 12, 14, 16) comprises a first type of page element (11), hiding the first type of page element (11) in the target application page (10, 12, 14, 16) on the basis of the target page layout model, or displaying the first type of page element (11) that is in a hidden state in the target application page (10, 12, 14, 16);
wherein the first type of page element (11) comprises any one of the following: a side navigation bar, a column list, and a bottom navigation bar.

2. The method according to claim 1, wherein the determining (202), from a preset responsive user interface set, a target page layout model corresponding to the target information comprises:
in a case that the size of the target application page (10, 12, 14, 16) changes from a first size to a second size, determining a page layout model corresponding to the second size in the preset responsive user interface set as the target page layout model.

3. The method according to claim 1, wherein the adjusting (203) a page layout of the target application page (10, 12, 14, 16) on a basis of the target page layout model comprises:
adjusting first display parameters of the target application page (10, 12, 14, 16) on the basis of the target page layout model, the first display parameters comprising at least one of the following: display layout information, display state information, display size information, and display position information of page elements in the target application page (10, 12, 14, 16);
and reconfiguring parameters of the target application page (10, 12, 14, 16) on a basis of the first display parameters.

4. The method according to claim 1, wherein after the adjusting (203) a page layout of the target application page (10, 12, 14, 16) on a basis of the target page layout model, the method further comprises:
receiving a first input of a user for the first type of page element (11); and
editing, in response to the first input, the first type of page element (11) by using an editing manner corresponding to the first input.

5. The method according to any one of claims 1 to 3, wherein the adjusting (203) a page layout of the target application page (10, 12, 14, 16) on a basis of the target page layout model comprises:
adjusting, in a case that a page element of the target application page (10, 12, 14, 16) comprises a second type of page element (12), second display parameters of the target application page (10, 12, 14, 16) on the basis of the target page layout model, the second display parameters comprising at least one of the following: a line spacing of the page element of the target application page (10, 12, 14, 16), a display size of the page element of the target application page (10, 12, 14, 16), and a display number of the page element of the target application page (10, 12, 14, 16).

6. The method according to claim 1, wherein after the adjusting (203) a page layout of the target application page (10, 12, 14, 16) on a basis of the target page layout model, the method further comprises:
receiving a second input of a user for a first screen area, the first screen area being a screen area for displaying the target application page (10, 12, 14, 16); and
adjusting, in response to the second input, a size of the first screen area, and adjusting the size of the target application page (10, 12, 14, 16) on a basis of an adjusted size of the first screen area.

7. An electronic device (100), comprising a processor (110), a memory (109), and a program or an instruction stored in the memory (109) and executable on the processor (110), wherein when the program or the instruction is executed by the processor (110), steps of the method for adjusting a page layout according to any one of claims 1 to 6 are implemented.

8. A readable storage medium, storing a program or an instruction, wherein when the program or the instruction is executed by a processor (110), steps of the method for adjusting a page layout according to any one of claims 1 to 6 are implemented.

9. A computer program product, being performed by at least one processor (110) to implement the method for adjusting a page layout according to any one of claims 1 to 6.

## Patentansprüche

1. Ein Verfahren zum Anpassen eines Seitenlayouts, das Folgendes beinhaltet:
Erhalten (201) von Zielinformationen in einem Fall, in dem eine Zielanwendungsseite (10, 12, 14, 16) angezeigt wird, wobei die Zielinformationen zum Angeben einer Änderung einer Größe der Zielanwendungsseite (10, 12, 14, 16) verwendet werden;
Bestimmen (202), aus einem voreingestellten responsiven Benutzerschnittstellensatz, eines Zielseitenlayoutmodells, das den Zielinformationen entspricht; und
Anpassen (203) eines Seitenlayouts der Zielanwendungsseite (10, 12, 14, 16) auf einer Basis des Zielseitenlayoutmodells; **dadurch gekennzeichnet, dass** das Anpassen (203) des Seitenlayouts der Zielanwendungsseite (10, 12, 14, 16) auf der Basis des Zielseitenlayoutmodells Folgendes beinhaltet:
in einem Fall, in dem ein Seitenelement der Zielanwendungsseite (10, 12, 14, 16) einen ersten Typ von Seitenelement (11) beinhaltet, Verbergen des ersten Typs von Seitenelement (11) in der Zielanwendungsseite (10, 12, 14, 16) auf der Basis des Zielseitenlayoutmodells oder Anzeigen des ersten Typs von Seitenelement (11), der sich in einem verborgenen Zustand in der Zielanwendungsseite (10, 12, 14, 16) befindet;
wobei der erste Typ von Seitenelement (11) eines der Folgenden beinhaltet: eine seitliche Navigationsleiste, eine Spaltenliste und eine untere Navigationsleiste.

2. Verfahren gemäß Anspruch 1, wobei das Bestimmen (202), aus einem voreingestellten responsiven Benutzerschnittstellensatz, eines Zielseitenlayoutmodells, das den Zielinformationen entspricht, Folgendes beinhaltet:
in einem Fall, in dem sich die Größe der Zielanwendungsseite (10, 12, 14, 16) von einer ersten Größe zu einer zweiten Größe ändert, Bestimmen eines Seitenlayoutmodells,
das der zweiten Größe in dem voreingestellten responsiven Benutzerschnittstellensatz entspricht, als das Zielseitenlayoutmodell.

3. Verfahren gemäß Anspruch 1, wobei das Anpassen (203) eines Seitenlayouts der Zielanwendungsseite (10, 12, 14, 16) auf einer Basis des Zielseitenlayoutmodells Folgendes beinhaltet:
Anpassen erster Anzeigeparameter der Zielanwendungsseite (10, 12, 14, 16) auf der Basis des Zielseitenlayoutmodells, wobei die ersten Anzeigeparameter mindestens eines der Folgenden beinhalten: Anzeigelayoutinformationen, Anzeigezustandsinformationen, Anzeigegrößeninformationen und
Anzeigepositionsinformationen von Seitenelementen in der Zielanwendungsseite (10, 12, 14, 16);
und Neukonfigurieren von Parametern der Zielanwendungsseite (10, 12, 14, 16) auf einer Basis der ersten Anzeigeparameter.

4. Verfahren gemäß Anspruch 1, wobei das Verfahren nach dem Anpassen (203) eines Seitenlayouts der Zielanwendungsseite (10, 12, 14, 16) auf einer Basis des Zielseitenlayoutmodells ferner Folgendes beinhaltet:
Empfangen einer ersten Eingabe eines Benutzers für den ersten Typ von Seitenelement (11); und
Bearbeiten, als Reaktion auf die erste Eingabe, des ersten Typs von Seitenelement (11) unter Verwendung einer Bearbeitungsweise, die der ersten Eingabe entspricht.

5. Verfahren gemäß einem der Ansprüche 1 bis 3, wobei das Anpassen (203) eines Seitenlayouts der Zielanwendungsseite (10, 12, 14, 16) auf einer Basis des Zielseitenlayoutmodells Folgendes beinhaltet:
Anpassen, in einem Fall, in dem ein Seitenelement der Zielanwendungsseite (10, 12, 14, 16) einen zweiten Typ von Seitenelement (12) beinhaltet, zweiter Anzeigeparameter der Zielanwendungsseite (10, 12, 14, 16) auf der Basis des Zielseitenlayoutmodells,
wobei die zweiten Anzeigeparameter mindestens eines der Folgenden beinhalten: einen Zeilenabstand des Seitenelements der Zielanwendungsseite (10, 12, 14, 16), eine Anzeigegröße des Seitenelements der Zielanwendungsseite (10, 12, 14, 16) und eine Anzeigezahl des Seitenelements der Zielanwendungsseite (10, 12, 14, 16).

6. Verfahren gemäß Anspruch 1, wobei das Verfahren nach dem Anpassen (203) eines Seitenlayouts der Zielanwendungsseite (10, 12, 14, 16) auf einer Basis des Zielseitenlayoutmodells ferner Folgendes beinhaltet:
Empfangen einer zweiten Eingabe eines Benutzers für einen ersten Bildschirmbereich, wobei der erste Bildschirmbereich ein Bildschirmbereich zum Anzeigen der Zielanwendungsseite (10, 12, 14, 16) ist; und
Anpassen, als Reaktion auf die zweite Eingabe, einer Größe des ersten Bildschirmbereichs und Anpassen der Größe der Zielanwendungsseite (10, 12, 14, 16) auf einer Basis einer angepassten Größe des ersten Bildschirmbereichs.

7. Eine elektronische Vorrichtung (100), die einen Prozessor (110), einen Speicher (109) und ein Programm oder eine Anweisung, das/die in dem Speicher (109) gespeichert ist und auf dem Prozessor (110) ausführbar ist, beinhaltet, wobei, wenn das Programm oder die Anweisung durch den Prozessor (110) ausgeführt wird, Schritte des Verfahrens zum Anpassen eines Seitenlayouts gemäß einem der Ansprüche 1 bis 6 implementiert werden.

8. Ein lesbares Speichermedium, das ein Programm oder eine Anweisung speichert, wobei, wenn das Programm oder die Anweisung durch einen Prozessor (110) ausgeführt wird, Schritte des Verfahrens zum Anpassen eines Seitenlayouts gemäß einem der Ansprüche 1 bis 6 implementiert werden.

9. Ein Computerprogrammprodukt, das durch mindestens einen Prozessor (110) durchgeführt wird, um das Verfahren zum Anpassen eines Seitenlayouts gemäß einem der Ansprüche 1 bis 6 zu implementieren.

## Revendications

1. Un procédé pour l'ajustement d'une mise en page, comprenant :
l'obtention (201) d'informations cibles dans le cas où une page d'application cible (10, 12, 14, 16) est affichée, les informations cibles étant utilisées pour l'indication d'un changement d'une taille de la page d'application cible (10, 12, 14, 16) ;
la détermination (202), à partir d'un ensemble d'interfaces utilisateur réactives prédéfini, d'un modèle de mise en page cible correspondant aux informations cibles ; et
l'ajustement (203) d'une mise en page de la page d'application cible (10, 12, 14, 16) sur la base du modèle de mise en page cible ; **caractérisé en ce que** l'ajustement (203) de la mise en page de l'application cible (10, 12, 14, 16) sur la base du modèle de mise en page cible comprend :
dans le cas où un élément de page de la page d'application cible (10, 12, 14, 16) comprend un premier type d'élément de page (11), le masquage du premier type d'élément de page (11) dans la page d'application cible (10, 12, 14, 16) sur la base du modèle de mise en page cible, ou l'affichage du premier type d'élément de page (11) qui est dans un état masqué dans la page d'application cible (10, 12, 14, 16) ;
dans lequel le premier type d'élément de page (11) comprend l'un quelconque des items suivants : une barre de navigation latérale, une liste en colonne, et une barre de navigation inférieure.

2. Le procédé selon la revendication 1, dans lequel la détermination (202), à partir d'un ensemble d'interfaces utilisateur réactives prédéfini, d'un modèle de mise en page cible correspondant aux informations cibles comprend :
dans le cas où la taille de la page d'application cible (10, 12, 14, 16) change d'une première taille à une deuxième taille, la détermination d'un modèle de mise en page correspondant à la deuxième taille dans l'ensemble d'interfaces utilisateur réactives prédéfini comme modèle de mise en page cible.

3. Le procédé selon la revendication 1, dans lequel l'ajustement (203) d'une mise en page de la page d'application cible (10, 12, 14, 16) sur la base du modèle de mise en page cible comprend :
l'ajustement de premiers paramètres d'affichage de la page d'application cible (10, 12, 14, 16) sur la base du modèle de mise en page cible, les premiers paramètres d'affichage comprenant au moins un des items suivants : des informations de disposition d'affichage, des informations d'état d'affichage, des informations de taille d'affichage, et des informations de position d'affichage d'éléments de page dans la page d'application cible (10, 12, 14, 16) ;
et la reconfiguration de paramètres de la page d'application cible (10, 12, 14, 16) sur la base des premiers paramètres d'affichage.

4. Le procédé selon la revendication 1, le procédé comprenant en outre, après l'ajustement (203) d'une mise en page de la page d'application cible (10, 12, 14, 16) sur la base du modèle de mise en page cible :
la réception d'une première entrée d'un utilisateur pour le premier type d'élément de page (11) ; et
l'édition, en réponse à la première entrée, du premier type d'élément de page (11) par utilisation d'une manière d'éditer correspondant à la première entrée.

5. Le procédé selon l'une quelconque des revendications 1 à 3, dans lequel l'ajustement (203) d'une mise en page de la page d'application cible (10, 12, 14, 16) sur la base du modèle de mise en page cible comprend :
l'ajustement, dans le cas où un élément de page de la page d'application cible (10, 12, 14, 16) comprend un deuxième type d'élément de page (12), de deuxièmes paramètres d'affichage de la page d'application cible (10, 12, 14, 16) sur la base du modèle de mise en page cible, les deuxièmes paramètres d'affichage comprenant au moins un des items suivants : un interligne de l'élément de page de la page d'application cible (10, 12, 14, 16), une taille d'affichage de l'élément de page de la page d'application cible (10, 12, 14, 16), et un numéro d'affichage de l'élément de page de la page d'application cible (10, 12, 14, 16).

6. Le procédé selon la revendication 1, le procédé comprenant en outre, après l'ajustement (203) d'une mise en page de la page d'application cible (10, 12, 14, 16) sur la base du modèle de mise en page cible :
la réception d'une deuxième entrée d'un utilisateur pour une première zone d'écran, la première zone d'écran étant une zone d'écran pour l'affichage de la page d'application cible (10, 12, 14, 16) ; et
l'ajustement, en réponse à la deuxième entrée, d'une taille de la première zone d'écran, et l'ajustement de la taille de la page d'application cible (10, 12, 14, 16) sur la base d'une taille ajustée de la première zone d'écran.

7. Un dispositif électronique (100), comprenant un processeur (110), une mémoire (109), et un programme ou une instruction stocké dans la mémoire (109) et exécutable sur le processeur (110), dans lequel lorsque le programme ou l'instruction est exécuté par le processeur (110), des étapes du procédé pour l'ajustement d'une mise en page selon l'une quelconque des revendications 1 à 6 sont mises en œuvre.

8. Un support de stockage lisible, stockant un programme ou une instruction, dans lequel lorsque le programme ou l'instruction est exécuté par un processeur (110), des étapes du procédé pour l'ajustement d'une mise en page selon l'une quelconque des revendications 1 à 6 sont mises en œuvre.

9. Un produit-programme informatique, qui est exécuté par au moins un processeur (110) pour mettre en œuvre le procédé pour l'ajustement d'une mise en page selon l'une quelconque des revendications 1 à 6.
